# EUROPÄISCHE PATENTSCHRIFT

(11) **EP 1 558 486 B1**
(45) Veröffentlichungstag und Bekanntmachung des Hinweises auf die Patenterteilung: **29.11.2006**
(21) Anmeldenummer: 03807736.8
(22) Anmeldetag: 09.10.2003
(51) Int. Cl.: B62H 5/00

(54) **FAHRRADSCHLOSS**
BICYCLE LOCK
CADENAS POUR BICYCLETTE

(30) Priorität: 09.10.2002 DE 10247055
(43) Veröffentlichungstag der Anmeldung: 03.08.2005
(73) Patentinhaber: Macro-Tec Development AG, 8832 Wollerau/SZ (CH)
(72) Erfinder: KUHBLANK, Martin, 10625 Berlin (DE)
(74) Vertreter: Kietzmann, Manfred
(86) Internationale Anmeldenummer: PCT/DE2003/003370
(87) Internationale Veröffentlichungsnummer: WO 2004/033279

(56) Entgegenhaltungen:
- DE-A- 3 103 784
- DE-A- 4 232 540
- DE-A- 4 417 085

## Beschreibung

Die Erfindung betrifft ein Schloß für Fahrräder.

### [Stand der Technik]

Fahrräder werden gegen Diebstahl mit Hilfe spezieller Schlösser gesichert, wobei eine absolute Sicherheit nicht zu erzielen ist. Auch die stabilsten und kompliziertesten Schlösser sind bei entsprechendem Aufwand durch Unbefugte zu öffnen. Gegen Spontandiebstähle hingegen bieten die meisten Schlösser einen guten Schutz.

In der deutschen Offenlegungsschrift DE 42 32 540 A1 ist ein gattungsgemäßes Schloß für Einspurfahrzeuge beschrieben, das aus einem rohrförmigen Behälter besteht, in dem eine zentrisch gelagerte Trommel angeordnet ist, auf der ein Seil aufgewickelt ist, wobei das eine Ende des Seils an der Trommel unlösbar befestigt ist und das andere Ende des Seils eine Sicherheitsschloßhälfte trägt, die in eine zweite am Kopf des Behälters unlösbar befestigte Sicherheitsschloßhälfte zwecks Verriegelung einführbar ist.

Der Nachteil dieses Fahrradschlosses und aller anderen bekannten Fahrradschlösser besteht darin, daß es - wenn überhaupt - mit einer speziellen Halterung am Fahrrad befestigt ist und daß die Sattelstütze und der mit ihr verbundene Sattel nicht in den Schutz einbezogen sind.

### [Aufgabe der Erfindung]

Der Erfindung liegt die Aufgabe zugrunde, ein Fahrradschloß anzugeben, das ohne spezielle Halterung am Fahrrad zu befestigen ist und mit dem sowohl das Fahrrad als auch die Sattelstütze und der mit ihr verbundene Sattel gesichert sind.

Die Aufgabe wird durch eine Erfindung mit den Merkmalen des Hauptanspruchs gelöst. Vorteilhafte Ausgestaltungen sind in den Unteransprüchen angegeben.

### [Beispiele]

Nachfolgend wird die Erfindung anhand eines Ausführungsbeispiels erläutert.

### Es zeigen

- Figur 1: eine Längsschnitt durch das erfindungsgemäße Fahrradschloß,
- Figur 2: eine Variante des Fahrradschlosses gemäß Figur 1,
- Figur 3: ein erfindungsgemäßes Fahrradschloß, kombiniert mit einer Rückleuchte,
- Figur 4: ein erfindungsgemäßes Fahrradschloß, kombiniert mit einem akustischen Signalgeber und einem Sender.

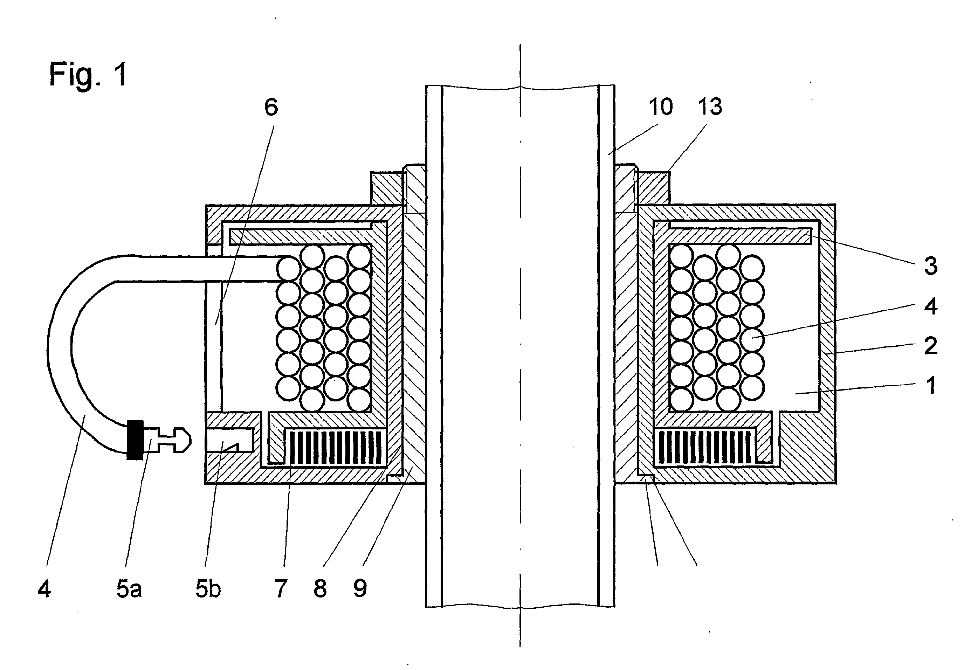

Die Figur 1 zeigt ein erfindungsgemäßes Fahrradschloß 1, bestehend aus einem Gehäuse 2 und einer im Gehäuse 2 drehbar gelagerten Trommel 3, auf der ein Seil 4 vollständig aufgewickelt ist. Das Gehäuse 2 hat einen Durchbruch 6, durch den das Seil 4 nach außen geführt ist. Das Seil 4 ist mit einem Ende an der Trommel 3 befestigt und trägt an dem nach außen geführten anderen Ende eine Schloßhälfte 5a, die mit der im Gehäuse 2 angeordneten Schloßhälfte 5b verbunden und dort mittels eines Sicherheitsschlosses (nicht dargestellt) fixiert werden kann.

Das Sicherheitsschloß 5 ist vorzugsweise als Zahlenschloß ausgebildet, daß über eine einzustellende Kombination geöffnet wird. Das Ver- und Entriegeln des Schlosses 5 kann aber auch z.B. über ein Funksignal erfolgen.

Zwischen dem Gehäuse 2 und der Trommel 3 ist eine Spiralfeder 7 angeordnet, die sich durch das Verdrehen der Trommel 3 beim Herausziehen des Seils 4 spannt und die beim Wegfall der Belastung die Trommel 3 zurückdreht, bis das Seil 4 aufgewikkelt bzw. gespannt ist.

Das Gehäuse 2 hat eine zentrisch angeordnete zylindrische Öffnung 8, in der eine Hülse 9 angeordnet ist. Der Außendurchmesser der Hülse 9 entspricht dem Durchmesser der Öffnung 8 und der Innendurchmesser der Hülse 9 entspricht dem Durchmesser der Sattelstütze 10.

Die Hülse 9 ist mit dem Gehäuse 2 drehfest verbunden. Das kann so geschehen, daß die Hülse an einem Ende wenigstens eine am Umfang angeordnete Nase 11 aufweist, die in eine der Form der Nase entsprechende Ausnehmung 12 des Gehäuses 2 einrastet.

Die Hülse 9 ist auf der Sattelstütze 10 fixiert, um eine definierte Lage des Fahrradschlosses 1 zu gewährleisten. Das Fixieren der Hülse 9 erfolgt in diesem Ausführungsbeispiel über eine Mutter 13 , die das über die Länge des Gewindes geschlitzte Ende (nicht dargestellt) der Hülse 9 gegen die Sattelstütze 10 preßt und so eine kraftschlüssige Verbindung zwischen Sattelstütze 10 und Hülse 9 erzeugt. Gleichzeitig drückt die Mutter 13 das Gehäuse 2 gegen die Nasen 11 der Hülse 9.

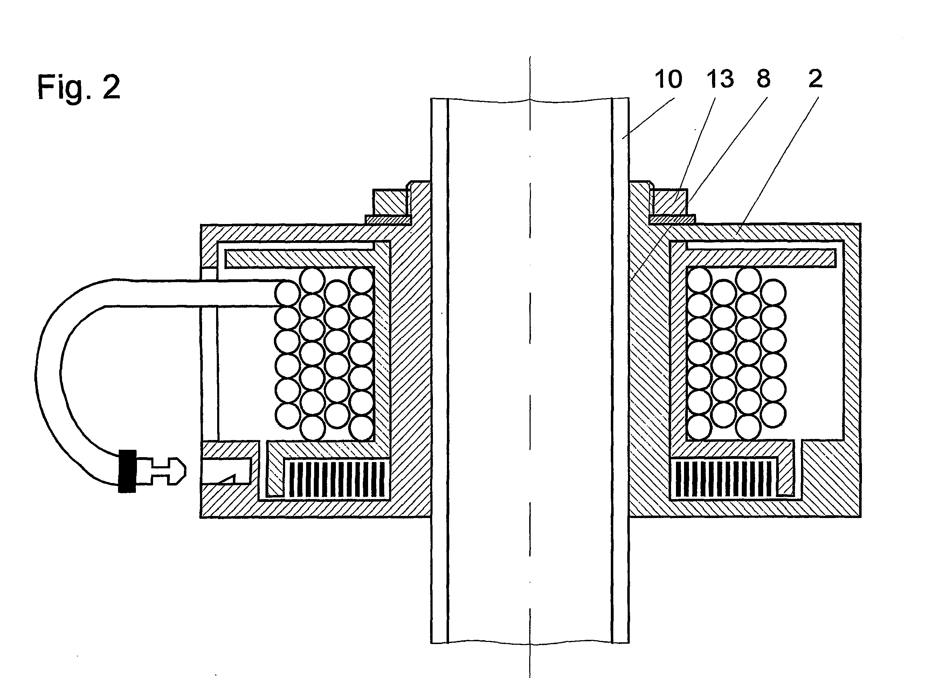

Wie in Figur 2 dargestellt, kann die Hülse 9 entfallen und als Teil des Gehäuses 2 ausgeführt sein, wobei lediglich ein dem Gewinde und der Mutter 13 entsprechendes Befestigungselement anzuordnen ist, das die feste Verbindung zwischen Gehäuse 2 und Sattelstütze 10 gewährleistet. Die Verbindung zwischen Gehäuse 2 bzw. Hülse 9 und Sattelstütze 10 ist nicht auf die dargestellte Form beschränkt, sondern kann mittels weiterer bekannter Verbindungselemente erfolgen. Die Verwendung von Hülsen 9 hat aber den Vorteil, daß durch die Verwendung von Hülsen 9 mit unterschiedlichen Innendurchmessern bzw. Innenquerschnitten das erfindungsgemäße Fahrradschloß 1 an Sattelstützen 10 mit unterschiedlichen Durchmessern bzw. Querschnittsformen angepaßt werden kann.

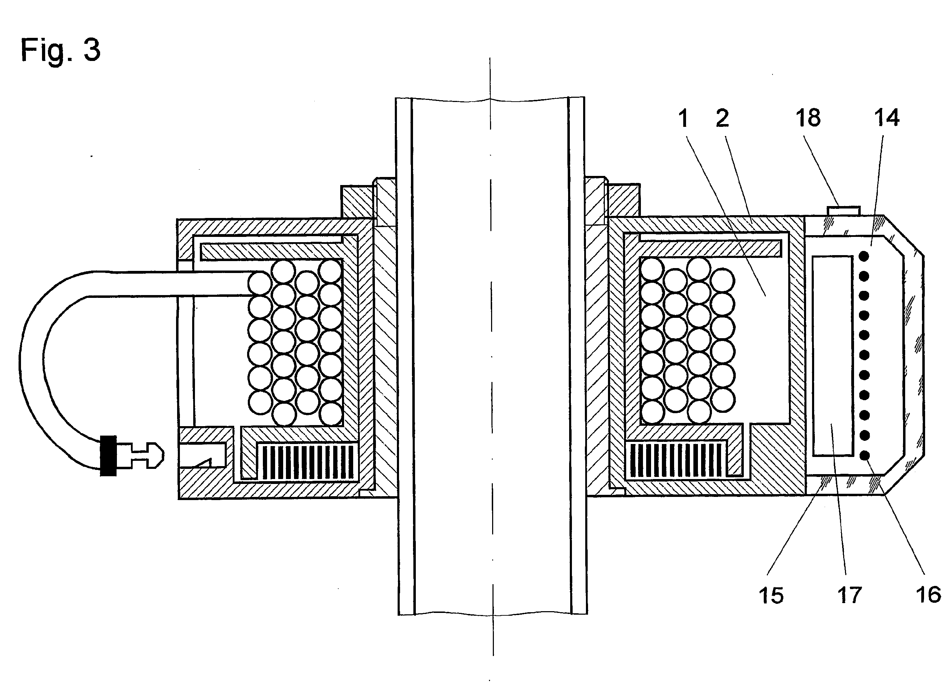

Nach einer weiteren Ausführungsform ist das erfindungsgemäße Fahrradschloß 1 mit einem Rückstrahler 14 kombiniert. Die Lage des Fahrradschlosses 1 an der Sattelstütze 10 und seine definierte Lage bieten optimale Voraussetzungen für die Anordnung eines Rückstrahlers am Fahrradschloß 1. Figur 3 zeigt die Verbindung des Fahrradschlosses 1 nach Figur 1 mit einem Rückstrahler 14. Der Rückstrahler 14 besteht aus einer durchsichtigen Haube 15, die mit dem Gehäuse 2 verbunden ist. Unter der Haube 15 sind Leuchtdioden 16 angeordnet, die von einer Batterie 17 gespeist werden. Die elektrische Verbindung wird über einen Schalter 18 hergestellt bzw. unterbrochen.

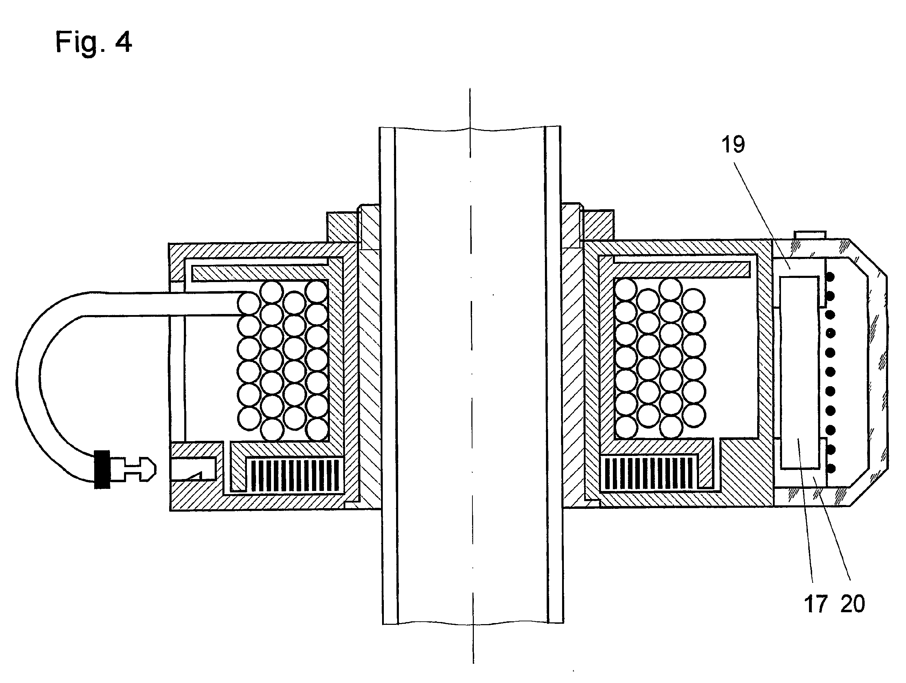

Das erfindungsgemäße Fahrradschloß 1 ist nach einer weiteren Ausführungsform (Figur 4) mit einem akustischen Signalgeber 19 kombiniert, der dann aktiviert wird, wenn das Seil 4 durchtrennt wird. Der Signalgeber wird von der Batterie 17 gespeist und ist so eingestellt, daß das akustische Signal für etwa 30 Sekunden in einer solchen Lautstärke ertönt, daß das Signal bis zu einer Entfernung von 300 m vernehmbar ist. Der akustische Signalgeber kann zusätzlich mit einem Bewegungssensor (nicht dargestellt) verbunden sein, der bereits dann Alarm auslöst, wenn das Fahrrad innerhalb einer bestimmten Zeit einer gewissen Anzahl von Bewegungen ausgesetzt wird.

Eine weitere Ausführungsform des erfindungsgemäßen Fahrradschlosses sieht vor, daß der akustische Signalgeber 19 mit einem Sender 20 verbunden ist, der - sobald der Signalgeber ausgelöst wird - eine entsprechende Meldung auf das Mobiltelefon des Besitzers überträgt und/oder der ein Funksignal ausstrahlt, das eine Ortung des Fahrradschlosses (und damit des Fahrrades) über Ortungssysteme, wie etwa GPS, ermöglicht.

Der Rückstrahler 14 ist mit dem Sicherheitsschloß 5 elektronisch in der Weise verbunden, daß er nur dann aktiviert werden kann, wenn das Sicherheitsschloß nicht geschlossen ist. Damit wird verhindert, daß die Batterie 17 mit dem Ziel entladen wird, das Auslösen eines Alarms zu verhindern.

Das erfindungsgemäße Fahrradschloß kann so ausgebildet sein, daß seine Bedienung (das Ver- und Entriegeln des Schlosses 5; das Einschalten des Rückstrahlers; das Beenden des Alarmes usw.) über eine Funkfernbedienung erfolgt, wobei die Fernbedienung selbst über eine PIN gesichert sein kann. Das hat den Vorteil, daß allein der Besitzer der Fernbedienung in der Lage ist, das Fahrradschloß 1 bedienen.

### [Bezugszeichenliste]

- 1: Fahrradschloß
- 2: Gehäuse
- 3: Trommel
- 4: Seil
- 5: Schloß
- 6: Durchbruch
- 7: Spiralfeder
- 8: Öffnung
- 9: Hülse
- 10: Sattelstütze
- 11: Nase
- 12: Ausnehmung
- 13: Mutter
- 14: Rückstrahler
- 15: Haube
- 16: Leuchtdioden
- 17: Batterie
- 18: Schalter
- 19: Signalgeber
- 20: Sender

## Patentansprüche

1. Fahrradschloß, bestehend aus
a) einem Gehäuse (2) und einer im Gehäuse (2) drehbar gelagerten Trommel (3),
b) einem auf der Trommel (3) aufgewickelten Seil (4), das durch einen Durchbruch (6) des Gehäuses (2) nach außen führbar ist, wobei das Seil (4) mit einem Ende an der Trommel (3) befestigt ist und an dem nach außen geführten anderen Ende eine Schloßhälfte (5a) trägt, die mit der im Gehäuse (2) angeordneten Schloßhälfte (5b) verbunden und dort fixiert werden kann,
c) einer Spiralfeder (7), die zwischen dem Gehäuse (2) und der Trommel (3) angeordnet ist,
d) einem Befestigungselement zur Fixierung des Gehäuses (2) auf einer Sattelstütze (10) eines Fahrrades
**gekennzeichnet durch**
e) einer im Gehäuse (2) zentrisch angeordneten zylindrischen Öffnung (8), in die eine Sattelstütze (10) eines Fahrrades aufnehmbar ist.

2. Fahrradschloß nach Anspruch 1, **dadurch gekennzeichnet, daß** das Befestigungselement zur Fixierung des Gehäuses (2) auf einer Sattelstütze (10) durch eine Hülse (9) gebildet ist, die in der Öffnung (8) des Gehäuses drehfest angeordnet ist, wobei deren Außendurchmesser dem Durchmesser der Öffnung (8) und deren Innendurchmesser dem Durchmesser der Sattelstütze (10) entspricht und die auf der Sattelstütze (10) fixierbar ist.

3. Fahrradschloß nach den Ansprüchen 1 und 2, **dadurch gekennzeichnet, daß** das Fixieren der Hülse (9) bzw. des Gehäuses (2) auf der Sattelstütze (10) mittels einer Mutter (13) erfolgt, die das über die Länge des Gewindes geschlitzte Ende der Hülse (9) des Gehäuses (2) gegen die Sattelstütze (10) preßt.

4. Fahrradschloß nach einem der Ansprüche 1 bis 3, **dadurch gekennzeichnet, daß** durch die Verwendung von Hülsen (9) mit unterschiedlichen Innendurchmessern bzw. Innenquerschnitten das Fahrradschloß (1) an Sattelstützen (10) mit unterschiedlichen Durchmessern bzw. Querschnittsformen angepaßt wird.

5. Fahrradschloß nach einem der Ansprüche 1 bis 4, **dadurch gekennzeichnet, daß** das Fahrradschloß (1) mit einem Rückstrahler (14) verbunden ist.

6. Fahrradschloß nach einem der Ansprüche 1 bis 5, **dadurch gekennzeichnet, daß** das Fahrradschloß (1) mit einem akustischem Signalgeber (19) verbunden ist.

7. Fahrradschloß nach einem der Ansprüche 1 bis 6, **dadurch gekennzeichnet, daß** der akustische Signalgeber (19) mit einem Bewegungssensor verbunden ist.

8. Fahrradschloß nach einem der Ansprüche 1 bis 7, **dadurch gekennzeichnet, daß** der akustische Signalgeber mit einem Sender (20) verbunden ist, der eine Meldung über den Alarm auf das Mobiltelefon des Besitzers überträgt und/oder ein Funksignal ausstrahlt, das eine Ortung des Fahrradschlosses (1) über Ortungssysteme ermöglicht.

9. Fahrradschloß nach einem der Ansprüche 1 bis 8, **dadurch gekennzeichnet, daß** das Fahrradschloß (1) über eine Fernbedienung bedient wird.

## Claims

1. Bicycle lock, consisting of
a) a housing (2) and a reel (3) pivoted within the housing (2);
b) a cable (4) wound up on the reel (3) and guidable outwardly through an opening (6) in the housing (2), wherein one end of the cable (4) is attached to the reel (3) and the other, outwardly guided end carries a half of the lock (5a) that can be connected to the half of the lock (5b) arranged within the housing (2) and can be fixed there;
c) a flat spiral spring (7) arranged between the housing (2) and the reel (3);
d) a fastening element for fixing the housing (2) on a seat pillar (10) of a bicycle,
**characterized by**
e) a cylindrical opening (8) that is centrally arranged within the housing (2) and in which a seat pillar (10) of a bicycle is receivable.

2. Bicycle lock according to claim 1, **characterized in that** the fastening element for fixing the housing (2) on a seat pillar (10) is formed as a sleeve (9) that is non-rotatably arranged within the opening (8) of the housing, wherein its outer diameter corresponds to the diameter of the opening (8) and its inner diameter corresponds to the diameter of the seat pillar (10) and it is fixable on the seat pillar (10).

3. Bicycle lock according to claims 1 and 2, **characterized in that** the sleeve (9) or the housing (2) is fixed on the seat pillar (10) by means of a nut (13) that presses the end of the sleeve (9) of the housing (2) against the seat pillar (10), i.e., the end that is slotted along the length of the thread.

4. Bicycle lock according to any one of claims 1 to 3, **characterized in that** by using sleeves (9) having different inner diameters or inner cross-sections, the bicycle lock (1) is adapted to seat pillars (10) having different diameters or cross-sectional shapes.

5. Bicycle lock according to any one of claims 1 to 4, **characterized in that** the bicycle lock (1) is connected to a rear reflector (14).

6. Bicycle lock according to any one of claims 1 to 5, **characterized in that** the bicycle lock (1) is connected to an acoustic signal transmitter (19).

7. Bicycle lock according to any one of claims 1 to 6, **characterized in that** the acoustic signal transmitter (19) is connected to a motion sensor.

8. Bicycle lock according to any one of claims 1 to 7, **characterized in that** the acoustic signal transmitter is connected to a transmitter (20) that transmits an alarm message to the mobile telephone of the owner and/or emits a radio signal that enables the bicycle lock (1) to be located by means of locating systems.

9. Bicycle lock according to any one of claims 1 to 8, **characterized in that** the bicycle lock (1) is operated by remote control.

## Revendications

1. Antivol de vélo, composé
a) d'un boîtier (2) et d'un tambour (3) reposant en rotation dans le boîtier (2),
b) d'un câble (4), enroulé sur le tambour (3), qui peut être guidé vers l'extérieur à travers une percée (6) du boîtier (2), le câble (4) étant fixé avec une extrémité sur le tambour (3) et portant sur l'autre extrémité conduite vers l'extérieur une moitié d'antivol (5a) qui est raccordée à la moitié d'antivol (5b) disposée dans le boîtier (2) et peut y être fixée,
c) d'un ressort à boudin (7) qui est disposé entre le boîtier (2) et le tambour (3),
d) d'un élément de fixation pour la fixation du boîtier (2) sur un tube porte-selle (10) d'un vélo,
**caractérisé par**
e) une ouverture (8) cylindrique disposée de façon centrale dans le boîtier (2) et dans laquelle un tube porte-selle (10) d'un vélo peut être logé.

2. Antivol de vélo selon la revendication 1, **caractérisé en ce que** l'élément de fixation pour la fixation du boîtier (2) sur un tube porte-selle (10) est formé par un manchon (9) qui est disposé de façon bloquée en rotation dans l'ouverture (8) du boîtier, le diamètre extérieur du manchon correspondant au diamètre de l'ouverture (8) et le diamètre intérieur du manchon correspondant au diamètre du tube porte-selle (10) et qui peut être fixé sur le tube porte-selle (10).

3. Antivol de vélo selon les revendications 1 et 2, **caractérisé en ce que** la fixation du manchon (9) ou du boîtier (2) sur le tube porte-selle (10) s'effectue au moyen d'un écrou (13) qui presse contre le tube porte-selle (10) l'extrémité fendue du manchon (9) du boîtier (2) sur la longueur du filet.

4. Antivol de vélo selon une des revendications 1 à 3, **caractérisé en ce que**, par l'utilisation de manchons (9) avec différents diamètres intérieurs ou différentes sections intérieures, l'antivol de vélo (1) est adapté à des tubes porte-selle (10) avec différents diamètres ou différentes formes de section.

5. Antivol de vélo selon une des revendications 1 à 4, **caractérisé en ce que** l'antivol de vélo (1) est raccordé à un rétroréflecteur (14).

6. Antivol de vélo selon une des revendications 1 à 5, **caractérisé en ce que** l'antivol de vélo (1) est raccordé à un générateur de signaux acoustiques (19).

7. Antivol de vélo selon une des revendications 1 à 6, **caractérisé en ce que** le générateur de signaux acoustiques (19) est raccordé à un détecteur de mouvement.

8. Antivol de vélo selon une des revendications 1 à 7, **caractérisé en ce que** le générateur de signaux acoustiques est raccordé à un émetteur (20) qui transmet un message concernant l'alarme au téléphone portable du propriétaire et/ou diffuse un signal radio qui permet une localisation de l'antivol de vélo (1) via des systèmes de localisation.

9. Antivol de vélo selon une des revendications 1 à 8, **caractérisé en ce que** l'antivol de vélo (1) est commandé via une télécommande.
